# EUROPEAN PATENT SPECIFICATION

(11) **EP 4 450 562 B1**
(45) Date of publication and mention of the grant of the patent: **15.04.2026**
(21) Application number: 24199526.5
(22) Date of filing: 08.12.2020
(51) Int. Cl.: C08G 65/00, C08L 71/00, C08G 77/46, C08G 65/48, C08L 71/02, C09D 171/02, C09D 183/12, C08G 65/333, C08G 65/336, C08L 83/12

(54) **ALKOXYSILYL GROUP-CONTAINING PERFLUOROPOLYETHER COMPOUND, AND COMPOSITION CONTAINING SAME**
ALKOXYSILYLGRUPPENHALTIGE PERFLUORPOLYETHERVERBINDUNG UND ZUSAMMENSETZUNG DAMIT
COMPOSÉ PERFLUOROPOLYÉTHER CONTENANT UN GROUPE ALCOXYSILYLE, ET COMPOSITION LE CONTENANT

(30) Priority: 20.01.2020 JP 2020006551
(43) Date of publication of application: 23.10.2024
(62) Divisional of application: 20915376.6
(73) Proprietor: Shin-Etsu Chemical Co., Ltd., Tokyo 100-0005 (JP)
(72) Inventor: NEGISHI, Kazuyuki, Annaka-shi, 3790-0224 (JP)
(74) Representative: Mewburn Ellis LLP

(56) References cited:
- EP-A1- 1 923 434
- EP-A2- 1 801 144
- JP-A- 2008 144 144

## Description

### TECHNICAL FIELD

This invention relates to an alkoxysilyl group-containing perfluoropolyether and to a composition containing the same.

### BACKGROUND ART

Coating compositions that include a perfluoropolyether compound have hitherto been applied to building materials, precoated steel sheets and the like for such purposes as to prevent scratches, impart water and oil repellency, and improve the aesthetic appearance.

For example, Patent Document 1 discloses that by adding a perfluoropolyether compound to an alkoxy group-containing silicone composition, a coating film of excellent water repellency, oil repellency and hardness can be obtained.

However, the perfluoropolyether compound of Patent Document 1 has a poor compatibility with silicones and, when the amount included is increased, gives rise to problems such as sedimentation or extremely slow dissolution.

Patent Document 2 discloses a coating composition comprising a fluorine-containing organosilicon compound A-5 having a structure according to formula (1) of present claim 1, wherein Z= CH2-O-C3H6, a=2, b=1, c=0, d=0, Q1=C2H4, R1=CH3. However, in comparison to Patent Document 2, present claim 1 discloses an alkoxysilyl group-containing perfluoropolyether of formula (1) wherein 'a' is 0 or 1, 'b' is 2 or 3 and 'c' is 0 such that a+b+c = 3.

The solvents used to dilute perfluoropolyether compounds are extremely limited, with halogenated solvents such as fluorochemical solvents being preferably used for this purpose. In recent years, to reduce the toxicity in humans and lower the environmental impact, the use of saturated hydrocarbon solvents as the diluting solvent has been desired.

However, because saturated hydrocarbon solvents are basically nonpolar, they are immiscible with perfluoropolyether compounds. Using a saturated hydrocarbon solvent to prepare a perfluoropolyether compound into a coating has thus been difficult.

### PRIOR ART DOCUMENTS

### PATENT DOCUMENTS

Patent Document 1: JP 5751211
Patent Document 2: EP1923434 A1

### SUMMARY OF INVENTION

### TECHNICAL PROBLEM

The present invention was arrived at in light of the above circumstances. An object of the invention is to provide an alkoxysilyl group-containing perfluoropolyether compound which has solubility in saturated hydrocarbon solvents and gives a coating film of excellent water repellency and oil repellency, Another object is to provide a composition containing such a compound.

### SOLUTION TO PROBLEM

The inventor has conducted intensive investigations in order to achieve the above objects. As a result, the inventor has discovered that certain alkoxysilyl group-containing perfluoropolyether compounds have an excellent solubility in saturated hydrocarbon solvents. This discovery ultimately led to the present invention.

Accordingly, the invention provides:
1. An alkoxysilyl group-containing perfluoropolyether compound of formula (1) below

   X-Z-PFPE-Z-X (1)

   [wherein
   PFPE is a divalent perfluoropolyether chain having a number-average molecular weight of from 500 to 5,000,
   each X is independently a group of formula (2) below 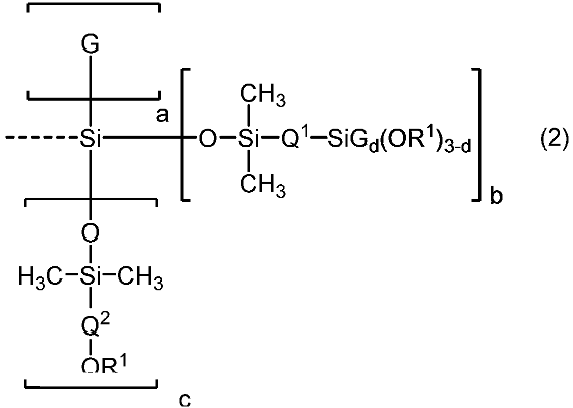 (wherein each Q¹ is independently a divalent organic group of 2 to 12 carbon atoms which may have a cyclic structure or a branched structure, each Q² is independently a divalent organic group of 2 to 12 carbon atoms which may include an ether bond and may have a cyclic structure or a branched structure, each R¹ is independently an alkyl group of 1 to 12 carbon atoms, each G is independently an alkyl group of 1 to 12 carbon atoms, 'a' is 0 or 1 'b' is **2 or 3,** and 'c' is **0** such that a+b+c = 3, 'd' is an integer from 0 to 2, and the dashed line denotes a bond), and
   each Z is independently a divalent organic group of any of the following formulae 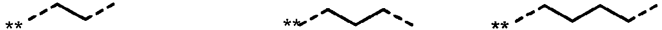 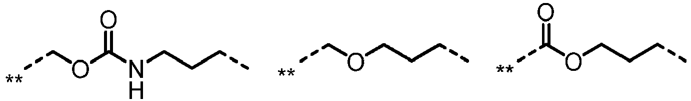 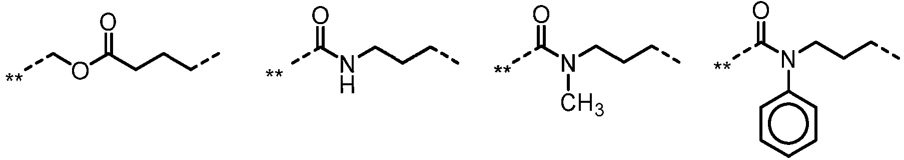 (wherein a dashed line denotes a bond and ** denotes a bonding site to the PFPE)]. Other aspects of this invention are disclosed in the appended claims.

### ADVANTAGEOUS EFFECTS OF INVENTION

The alkoxysilyl group-containing perfluoropolyether compound of the invention is capable of being rendered into a composition in which it is diluted with a saturated hydrocarbon solvent, and the composition can be suitably used as a coating agent for forming a coating film that imparts water repellency, oil repellency, durability and stain resistance to, for example, metal surfaces, precoated surfaces and resin surfaces on automotive and other bodies, building materials and moldings.

### DESCRIPTION OF EMBODIMENTS

The invention is described more fully below.

### Alkoxysilyl Group-Containing Perfluoropolyether Compound

[1] The alkoxysilyl group-containing perfluoropolyether compound of the invention has formula (1) below.
[Chem. 8]

X-Z-PFPE-Z-X (1)

In formula (1), PFPE is a divalent perfluoropolyether chain having a number-average molecular weight of from 500 to 5,000, preferably from 800 to 4,000, and more preferably from 1,000 to 3,000. It is preferably one having a structure in which perfluoroalkylene groups of structural formula (4) and oxygen atoms are alternately connected. In this invention, the number-average molecular weights are standard polystyrene-equivalent values obtained by gel permeation chromatography (GPC). 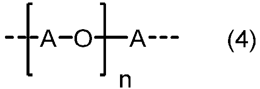 (The dashed lines in the formula denote bonds with Z.)

In formula (4), each A is independently a perfluoroalkylene group of 1 to 3 carbon atoms. When two or more types of A are included, the AO units may be arranged in any order.

The subscript 'n' is a number of 1 or more, preferably a number from 4 to 60, more preferably a number from 6 to 46, and even more preferably a number from 8 to 38.

Specific examples of the perfluoroalkylene group A of 1 to 3 carbon atoms include, but are not limited to, the structures shown below:

---CF₂--- (i)

---CF₂CF₂--- (ii)

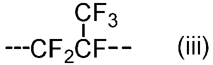

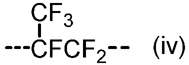

---CF₂CF₂CF₂---- (v)

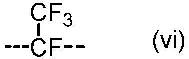

(wherein the dashed lines denote bonds).

Given the existence in the divalent perfluoropolyether chain denoted by PFPE of many oxygen atoms which serve as folding points that manifest slippage and the absence of branched structures which hinder folding movements of the chain, A is preferably the perfluoromethylene group of above formula (i) or the perfluoroethylene group of above formula (ii).

In particular, taking into account also the fact that the divalent perfluoropolyether chain denoted by PFPE is easy to obtain industrially, a divalent perfluoropolyether chain of formula (3) below having both an oxydifluoromethylene group and an oxytetrafluoroethylene group is especially preferred:

---CF₂(OCF₂)ₐ₁(OCF₂CF₂)_{b1}OCF₂--- (3)

(wherein the dashed lines denote bonds with Z, and the recurring units within parentheses to which a1 and b1 are attached are arranged in any order).

In formula (3), the number of perfluorooxymethylene groups (a1) is a number such that a1 ≥ 1, and the number of perfluorooxyethylene groups (b1) is a number such that b1 ≥ 1.

The ratio a1/b1 of the number of perfluorooxymethylene groups (a1) to the number of perfluorooxyethylene groups (b1), although not particularly limited, is preferably from 1/10 to 10/1, and more preferably from 3/10 to 10/3.

In above formula (1), each Z is independently a divalent organic group of one of the formulae shown below. Taking into account the availability of the starting materials and the ease of production, it is preferable for the two Z groups to be identical groups. 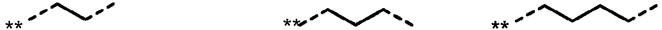 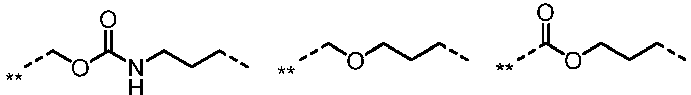 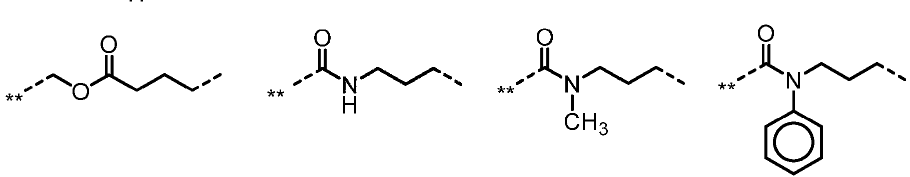 (In these formulae a dashed line denotes a bond and ** denotes a bonding site to the PFPE.)

Of these, each Z is preferably a divalent organic group of one of the following formulae: . 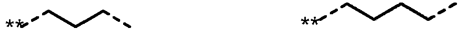 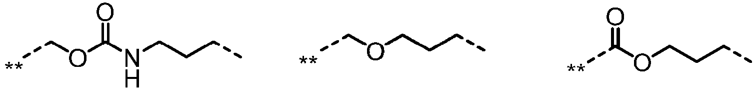 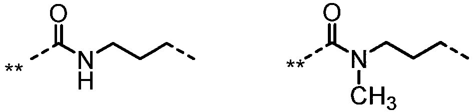 (Here, a dashed line denotes a bond and ** denotes a bonding site to the PFPE.)

In above formula (1), each X is independently a group of formula (2) below. However, taking into account, for example, the ease of production, it is preferable for the two X groups to be identical groups.

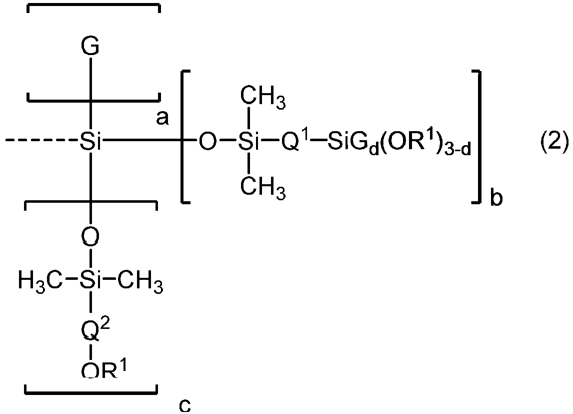

In formula (2), each Q¹ is independently a divalent hydrocarbon group of 2 to 12 carbon atoms which may have a cyclic structure or a branched structure. In this invention, groups of the following structural formulae in particular are preferred:

* --CH₂CH₂-- * ---CH(CH₃)--- * --CH₂CH₂CH₂-- * --CH(CH₃)CH₂--

* --CH₂CH₂CH₂CH₂-- * --CH₂CH(CH₃)CH₂-- * --CH₂CH₂CH₂CH₂CH₂-- * ---CH₂CH₂CH(CH₃)CH₂--

* --CH₂CH₂CH₂CH₂CH₂CH₂-- * --CH₂CH₂CH₂CH(CH₃)CH₂-- * --CH₂CH₂CH₂CH₂CH₂CH₂CH₂--

* --CH₂CH₂CH₂CH₂CH(CH₃)CH₂--- * --CH₂CH₂CH₂CH₂CH₂CH₂CH₂CH₂-- * --CH₂CH₂CH₂CH₂CH₂CH(CH₃)CH₂--

(wherein a dashed line denotes a bond and * denotes a bonding site to a silicon atom).

Also, each Q² is independently a divalent organic group of 2 to 12 carbon atoms which may include an ether bond and may have a cyclic structure or a branched structure. In this invention, groups of the following structural formulae in particular are preferred:

* --CH₂CH₂-- * --CH₂CH₂CH₂-- * --CH(CH₃)CH₂-- * ---CH₂CH₂CH(CH₃)CH₂--

* --CH₂CH₂CH₂OCH₂CH₂-- * --CH₂CH₂CH₂OCH₂CH₂OCHCH₂--

* --CH₂CH₂CH₂OCH₂CH₂OCH₂CH₂OCH₂CH₂-- * --CH₂CH₂CH₂OCH₂CH₂OCH₂CH₂OCH₂CH₂OCH₂CH₂--

* --CH₂CH₂CH₂OCH₂CH₂OCH₂CH₂OCH₂CH₂OCH₂CH₂OCH₂CH₂--

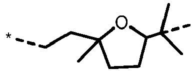

(wherein a dashed line denotes a bond and * denotes a bonding site to a silicon atom).

Each R¹ is independently an alkyl group of 1 to 12 carbon atoms, preferably 1 to 6 carbon atoms, and more preferably 1 to 4 carbon atoms.

The alkyl groups represented by R¹ may be linear, branched or cyclic. Specific examples include methyl, ethyl, n-propyl, isopropyl, n-butyl, isobutyl, sec-butyl, tert-butyl, n-pentyl, n-hexyl, cyclohexyl, n-heptyl and n-octyl groups. Methyl, ethyl, n-propyl and n-butyl groups are preferred.

Each G is independently an alkyl group of 1 to 12 carbon atoms, preferably 1 to 6 carbon atoms, and more preferably 1 to 4 carbon atoms. Specific examples and suitable examples include the same groups as those mentioned above for R¹.

The subscript 'a' is **0 or 1.**

The subscript 'b' is **2 or 3**

The subscript 'c' is 0. Also, these subscripts satisfy the condition a+b+c = 3.

The subscript 'd' is an integer from 0 to 2, preferably 0 or 1, and more preferably 0.

### [2] Method for Preparing Alkoxysilyl Group-Containing Perfluoropolyether Compound

The alkoxysilyl group-containing perfluoropolyether compound of the invention can be prepared by, for example, the following method.

### [A] Synthesis of Hydrogensiloxane

First, a perfluoropolyether group-containing hydrogensiloxane of formula (7) below is prepared by the cohydrolytic condensation of a perfluoropolyether which has alkoxysilyl groups at both ends and is represented by formula (5) below with Si-H bond-containing compounds of formula (6a) and/or (6b) below.

(R²O)₃₋ₐGₐSi-Z-PFPE-Z-Si(OR²)₃₋ₐGₐ (5)

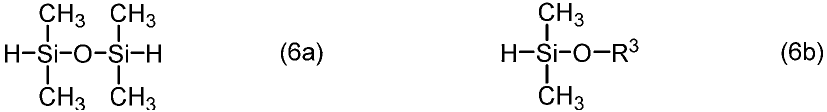

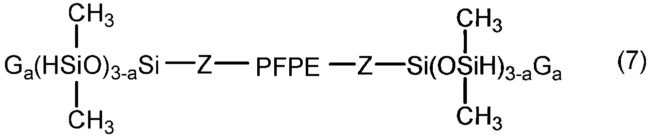

(In these formulae, PFPE, Z G and 'a' are as defined above.)

In the above formulae R² and R³ are each independently an alkyl group of 1 to 12, preferably 1 to 6, and more preferably 1 to 4, carbon atoms. Specific examples and suitable examples include the same groups as those mentioned above for R¹.

In cohydrolytic condensation, compound (6a) and/or compound (6b) are included in an amount with respect to compound (5) which, in order to prevent crosslinking between molecules of compound (5), is preferably at least two equivalents (silicon basis), more preferably from 2 to 10 equivalents, and even more preferably from 2 to 6 equivalents, of compound (6a) and/or compound (6b) per equivalent of alkoxy groups on compound (5). After cohydrolysis has been carried out, the unreacted compound (6a) and/or compound (6b) are preferably removed by vacuum distillation.

When compound (6a) and compound (6b) are used together, it is preferable for the added amounts (weight ratio) of compound (6a) and compound (6b) to be such that (6a)/(6b) = 50/1 to 1/50.

When carrying out cohydrolysis, it is preferable to use a hydrolysis catalyst.

A hitherto known catalyst may be used as the hydrolysis catalyst. Examples include acids such as hydrochloric acid, nitric acid, sulfuric acid, hydrogen halides, carboxylic acids and sulfonic acids; acidic or weakly acidic inorganic salts; solid acids such as ion-exchange resins; inorganic bases such as ammonia and sodium hydroxide; organic bases such as tributylamine, 1,5-diazabicyclo[4.3.0]nonene-5 (DBN) and 1,8-diazabicyclo[5.4.0]undecene-7 (DBU); and organometallic compounds such as organotin compounds, organotitanium compounds, organozirconium compounds and organoaluminum compounds. These may be of one type used alone, or two or more types may be used together.

Of these hydrolysis catalysts, in the present invention, acids such as hydrochloric acid, nitric acid, sulfuric acid and methanesulfonic acid; and organometallic compounds such as organotin compounds, organotitanium compounds and organoaluminum compounds are especially preferred.

Examples of suitable organometallic compounds include dibutyltin dilaurate, dibutyltin dioctate, dibutyltin diacetate, dioctyltin dilaurate, dioctyltin dioctate, dioctyltin diacetate, dibutyltin bis(acetylacetate), dioctyltin bis(acetyl laurate), tetrabutyl titanate, tetranonyl titanate, tetrakis(ethylene glycol) methyl ether titanate, tetrakis(ethylene glycol) ethyl ether titanate, bis(acetylacetonyl) dipropyl titanate, aluminum acetylacetate, aluminum bis(ethyl acetoacetate) mono-n-butylate, aluminum ethyl acetoacetate di-n-butylate, aluminum tris(ethyl acetoacetate) and hydrolyzates of these.

In particular, from the standpoint of reactivity, acids such as hydrochloric acid, nitric acid and methanesulfonic acid; and tetrabutyl titanate, aluminum ethyl acetoacetate di-n-butylate, aluminum bis(ethyl acetoacetate) mono-n-butylate and hydrolyzates of these are more preferred. Methanesulfonic acid is even more preferred.

The amount of hydrolysis catalyst used, although not particularly limited, is preferably from 0.001 to 15 mol%, and more preferably from 0.001 to 10 mol%, per mole of silicon-bonded alkoxy groups on the compound of formula (7).

The cohydrolytic condensation reaction may be carried out in the presence of an organic solvent.

The organic solvent is not particularly limited, provided that it is one which is miscible with the various above-mentioned starting compounds. Specific examples include aromatic hydrocarbons such as toluene and xylene; hydrocarbons such as hexane and octane; ketones such as methyl ethyl ketone and methyl isobutyl ketone; esters such as ethyl acetate and isobutyl acetate; alcohols such as methanol, ethanol, isopropanol, butanol, isobutanol and t-butanol; and fluorochemical solvents. These may be used singly or two or more may be used together.

Examples of fluorochemical solvents include fluorinated aromatic hydrocarbons such as 1,3-bis(trifluoromethyl)benzene and trifluorotoluene; perfluorocarbons of 3 to 12 carbon atoms, such as perfluorohexane and perfluoromethylcyclohexane; hydrofluorocarbons such as 1, 1,2,2,3,3,4-heptafluorocyclopentane and 1,1,1,2,2,3,3,4,4,5,5,6,6-tridecafluorooctane; hydrofluoroethers such as C₃F₇OCH₃, C₄F₉OCH₃, C₄F₉OC₂H₅ and C₂F₅CF(OCH₃)C₃F₇; and perfluoropolyethers such as Fomblin and Galden (Solvay S.A.), Demnum (Daikin Industries, Ltd.) and Krytox (The Chemours Company).

In the above reactions, it is preferable to add water. The amount of water added at the time of hydrolysis is preferably from 1 to 5 times, and more preferably from 1.5 to 3 times, the amount required to hydrolyze all the alkoxy groups in the starting materials.

The reaction conditions are preferably between -5°C and 20°C and from 15 to 300 minutes, and more preferably between 0°C and 10°C and from 30 to 180 minutes.

Specific examples of multifunctional hydrogensiloxanes that can be obtained from the above reaction include, but are not limited to, the compounds represented by the following formulae: 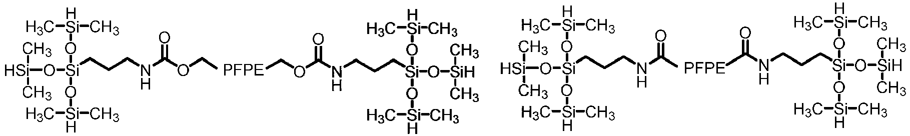 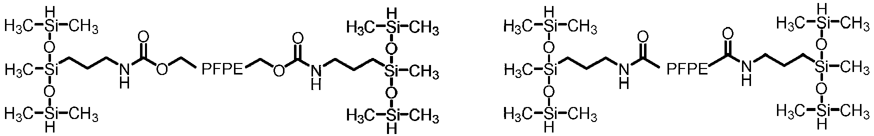 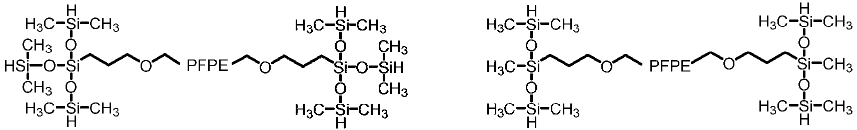 (wherein PFPE is as defined above).

### [B] Hydrosilylation Reaction

Next, an olefin compound of formula (8a) below and, optionally, an olefin compound of formula (8b) are added to the hydrogensiloxane (7) by a hydrosilylation reaction.

R⁴-Y¹-SiG_{d}(OR¹)_{3-d} (8a)

R⁴-Y²-O-R¹ (8b)

(Here, G, R¹ and d are the same as defined above.)

In the above formulae, R⁴ is an olefin group that is capable of addition reaction with a Si-H group. An alkenyl group of 2 to 8 carbon atoms is preferred. For example, alkenyl groups of 2 to 8 carbon atoms, such as vinyl, allyl, 1-propenyl, isopropenyl, 1-butenyl and isobutenyl groups, are preferred; vinyl and allyl groups are more preferred.

Y¹ is a single bond or a divalent organic group which may include an ether bond and may have a cyclic structure or a branched structure. In cases where Y¹ is not a single bond, the sum of the number of carbons on Y¹ and the olefin group is preferably from 3 to 12.

Specific examples of Y¹ other than a single bond include groups of the following structural formulae :

▪ ---CH₂---

▪ ---CH₂CH₂---

▪ ---CH₂CH₂CH₂---

▪ ---CH₂CH₂CH₂CH₂---

▪ ---CH₂CH₂CH₂CH₂CH₂---

▪ ---CH₂CH₂CH₂CH₂CH₂CH₂---

-(wherein a dashed line denotes a bond and * denotes a bonding site to the olefin group R⁴).

Y¹ is preferably a single bond or a divalent hydrocarbon group of one of the following structural formulae:

▪ ---CH₂---

▪ ---CH₂CH₂CH₂CH₂CH₂CH₂---

Y² is a single bond or a divalent organic group which may include an ether bond (excluding groups which include an oxygen at the end that bonds with an oxygen atom to form a -O-O- bond), and may have a cyclic structure or a branched structure. In cases where Y² is not a single bond, the sum of the number of carbon atoms making up Y² and the olefin group is preferably from 3 to 18, and more preferably from 3 to 13.

Specific examples of Y² other than a single bond include groups of the following structural formulae :

▪ ---CH₂---

▪ ---CH₂-O-CH₂CH₂---

▪ ---CH₂-O-CH₂CH₂O-CH₂CH₂---

▪ ---CH₂-O-CH₂CH₂O-CH₂CH₂-O-CH₂CH₂----

▪ ---CH₂-O-CH₂CH₂O-CH₂CH₂-O-CH₂CH₂-O-CH₂CH₂----

▪ ---CH₂-O-CH₂CH₂O-CH₂CH₂-O-CH₂CH₂-O-CH₂CH₂-O-CH₂CH₂----

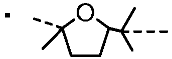

(wherein a dashed line denotes a bond and * denotes a bonding site to the olefin group R⁴).

Specific examples of the compound of formula (8a) include, but are not limited to, those of the following formulae:

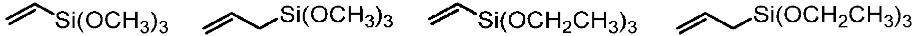

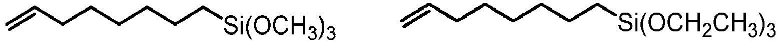

Specific examples of the compound of formula (8b) include, but are not limited to, those of the following formulae:

CH₂=CHCH₂OCH₃ CH₂=CHCH₂OCH₂CH₂OCH₃ CH₂=CHCH₂OCH₂CH₂OCH₂CH₂OCH₃

CH₂=CHCH₂OCH₂CH₂OCH₂CH₂OCH₂CH₂OCH₃ CH₂=CHCH₂OCH₂CH₂OCH₂CH₂OCH₂CH₂OCH₂CH₂OCH₃

In the above hydrosilylation reaction, the added amount of compound (8a) is preferably from 0.2 to 5 equivalents, and more preferably from 0.5 to 3 equivalents, per equivalent of hydrosilyl groups on the hydrogensiloxane (7).

When compound (8b) is used, the added amount thereof is preferably from 0.1 to 0.8 equivalent, and more preferably from 0.1 to 0.5 equivalent, per equivalent of hydrosilyl groups on the hydrogensiloxane (7).

When compound (8a) and compound (8b) are used together, the weight ratio (8a)/(8b) between the added amounts of compound (8a) and compound (8b) is preferably from 50/1 to 0.5/1.

The hydrosilylation reaction proceeds even without the use of a solvent, although a solvent may be optionally used.

It is preferable for the solvent to be a compound which does not hinder the hydrosilylation reaction and in which the compound (1) that forms following the reaction is soluble; one which dissolves compound (7), compound (8a) and the optionally used compound (8b) at the target reaction temperature is preferred.

Specific examples of such solvents include aromatic hydrocarbon compounds such as benzene, toluene and xylene; fluorine-modified aromatic hydrocarbon compounds such as m-xylene hexafluoride and benzotrifluoride; and fluorine-modified ether compounds such as methyl perfluorobutyl ether and perfluoro(2-butyltetrahydrofuran). Of these, toluene, xylene and m-xylene hexafluoride are preferred.

It is desirable to use a catalyst in the hydrosilylation reaction.

Catalysts that may be used are exemplified by compounds containing platinum family metals such as platinum, rhodium or palladium. Of these, platinum-containing compounds are preferred. For example, hexachloroplatinic(IV) acid hexahydrate, platinum carbonylvinylmethyl complexes, platinum-divinyltetramethyldisiloxane complexes, platinum-cyclovinylmethylsiloxane complexes, platinum-octyl aldehyde/octanol complexes, complexes of chloroplatinic acid with olefins, aldehydes, vinylsiloxanes or acetylene alcohols, and platinum supported on activated carbon may be suitably used.

The catalyst is included in an amount which, expressed as the amount of platinum family metal included with respect to the weight of the overall reaction system, is preferably from 0.1 to 5,000 ppm, and more preferably from 1 to 1,000 ppm.

**In** the hydrosilylation reaction, the sequence in which the various ingredients are mixed together and the reaction method are not particularly limited. For example, use can be made of the method of gradually heating a mixture containing compound (7), compound (8a) and, optionally, compound (8b) from room temperature to the addition reaction temperature; the method of heating a mixture containing compound (7), compound (8a) and, optionally, compound (8b) to the target reaction temperature and then adding the catalyst; the method of adding compound (7) dropwise to a mixture containing compound (8a), optional compound (8b) and the catalyst that has been heated to the target reaction temperature; and the method of adding in a dropwise manner a mixture containing compound (8a), optional compound (8b) and the catalyst to compound (7) that has been heated to the target reaction temperature.

Of these, the method of heating a mixture containing compound (7), compound (8a) and, optionally, compound (8b) from room temperature to the target reaction temperature and then adding the catalyst or the method of adding in a dropwise manner a mixture containing compound (8a), optional compound (8b) and the catalyst to compound (7) that has been heated to the target reaction temperature is preferred. **In** these methods, where necessary, the various ingredients or mixtures may be used after dilution with the above-described solvent.

In particular, when compound (8a) and compound (8b) are addition reacted with compound (7), it is preferable to carry out an addition reaction between compound (7) and compound (8b), subsequently effect an addition reaction using an excess amount of compound (8a), and then remove and purify the unreacted compound (8a). At this time, compounds in which R⁴, Y¹, Y² and R¹ mutually differ may be used in admixture as compound (8a) and as compound (8b).

The addition reaction is preferably carried out at between 20°C and 120°C for a period of from 30 to 300 minutes, and is more preferably carried out at between 50°C and 100°C for a period of from 30 to 120 minutes.

### [3] Composition

Because the alkoxysilyl group-containing perfluoropolyether compound of the invention can be cured with a hydrolytic condensation catalyst, compositions of the compound together with a hydrolytic condensation catalyst can be suitably used as curable compositions such as coatings.

This hydrolytic condensation catalyst is a compound for inducing the reaction of alkoxysilyl groups (Si-OR) included in the alkoxysilyl group-containing perfluoropolyether compound and the subsequently described alkoxysilane or alkoxysilane oligomer with, for example, moisture in the air or moisture on the substrate, thereby causing hydrolytic condensation to proceed.

The hydrolytic condensation catalyst that is used may be suitably selected from among known catalysts. Examples include organometallic compounds such as organotin compounds, organotitanium compounds, organozirconium compounds and organoaluminum compounds; inorganic acids such as hydrochloric acid and sulfuric acid; organic acids such as p-toluenesulfonic acid and various aliphatic or aromatic carboxylic acids; inorganic bases such as ammonia and sodium hydroxide; and organic bases such tributylamine, 1,5-diazabicyclo[4.3.0]nonene-5 (DBN) and 1,8-diazabicyclo[5.4.0]undecane-7 (DBU). These may be used singly or a plurality may be used together.

Of these, organometallic compounds selected from among organotin compounds, organotitanium compounds and organoaluminum compounds are preferred. Specific preferred examples include dibutyltin dilaurate, dibutyltin dioctate, dibutyltin diacetate, dioctyltin dilaurate, dioctyltin dioctate, dioctyltin diacetate, dibutyltin bis(acetylacetate), dioctyltin bis(acetyl laurate), tetrabutyl titanate, tetranonyl titanate, tetrakis(ethylene glycol) methyl ether titanate, tetrakis(ethylene glycol) ethyl ether titanate, bis(acetylacetonyl) dipropyl titanate, aluminum acetylacetonate, aluminum bis(ethyl acetoacetate) mono-n-butylate, aluminum ethyl acetoacetate di-n-butylate and aluminum tris(ethyl acetoacetate). In particular, from the standpoint of the reactivity and solubility, tetrabutyl titanate, aluminum ethyl acetoacetate di-n-butylate, aluminum bis(ethyl acetoacetate) mono-n-butylate and hydrolyzates of these are more preferred.

The amount of hydrolytic condensation catalyst used is preferably from 0.01 to 100 parts by weight, and more preferably from 0.5 to 50 parts by weight, per 100 parts by weight of the alkoxysilyl group-containing perfluoropolyether compound.

The composition curing temperature, although not particularly limited, is preferably between 10°C and 150°C, and more preferably between 15°C and 50°C. Carrying out the reaction under moistening is preferred for promoting the reaction.

The alkoxysilyl group-containing perfluoropolyether compound of the invention, in spite of containing a fluoropolymer as the backbone structure, has an excellent compatibility with saturated hydrocarbon solvents. Hence, it may be prepared as a composition by including, in addition to the hydrolysis catalyst, a saturated hydrocarbon solvent.

By using this saturated hydrocarbon solvent, a composition in which the alkoxysilyl group-containing perfluoropolyether compound and a hydrolysis catalyst are uniformly dissolved can be obtained. A thin film can be efficiently produced using this composition.

The saturated hydrocarbon solvent is preferably one having a boiling point of between 100°C and 200°C, and more preferably one having a boiling point of between 120°C and 180°C. In cases where the saturated hydrocarbon solvent, because it is a mixture or for some other reason, has a boiling point that is not a single temperature, one that has a distillation range (temperature range from initial boiling point to dry point) of between 100°C and 200°C is preferred, and one that has a distillation range of between 120°C and 180°C is more preferred. Here, from the standpoint of the ease of application, it is especially preferable for the temperature difference (temperature distribution) between the initial boiling point and the dry point to be in a 20°C range. In the case of a mixture, so long as the distillation range of the mixture falls within the above temperature range, a saturated hydrocarbon compound for which the boiling point of the compound by itself is not within the range of 100 to 200°C may be included.

When the boiling point or distillation range of the saturated hydrocarbon solvent is at or above the lower limit value indicated above, the composition containing this hydrocarbon solvent can be present in a liquid state on the substrate for the length of time required for film formation. When the boiling point or distillation range is at or below the above upper limit value, the solvent has a suitable volatility, and so the curability of the composition containing this hydrocarbon solvent is good.

The number of carbon atoms on the saturated hydrocarbon solvent is not particularly limited, although it is preferable for this to be such that the boiling point or distillation range of the solvent satisfies the above range.

The saturated hydrocarbon solvent having the above boiling point or distillation range is a solvent composed primarily of a saturated hydrocarbon having from 7 to 12 carbon atoms. Preferred examples include isoparaffinic solvents, n-paraffinic solvents and naphthenic solvents. Isoparaffinic solvents and naphthenic solvents are more preferred; isoparaffinic solvents are even more preferred.

A commercial product may be used as the saturated hydrocarbon solvent. Examples of commercial products include Marukasol R (boiling point, 177°C) from Maruzen Petrochemical Co., Ltd., Cactus Normal Paraffin N-10 (initial boiling point, 169°C; dry point, 176°C) from JXTG Nippon Oil & Energy Corporation, and ISOPAR G (initial boiling point, 166°C; dry point, 176°C) from ExxonMobil. These saturated hydrocarbon compounds may be used singly or a mixture of a plurality of such compounds may be used.

The saturated hydrocarbon solvent content in the inventive composition is preferably 5,000 parts by weight or less, more preferably 3,000 parts by weight or less, and even more preferably 1,000 parts by weight or less, per 100 parts by weight of the alkoxysilyl group-containing perfluoropolyether compound. When the saturated hydrocarbon solvent content is at or below this upper limit value, a good curability and a good wear resistance after curing can be obtained for the inventive composition. Although there is no particular lower limit for the content, to suitably adjust the viscosity and other properties of the composition, the content is preferably at least 10 parts by weight, more preferably at least 50 parts by weight, and even more preferably 100 parts by weight.

Aside from the above-described hydrolytic condensation catalyst and the saturated hydrocarbon solvent, the inventive composition may also include one or more compound selected from alkoxysilanes and hydrolytic condensation products of alkoxysilanes. The viscosity and the curing time of the composition and the hardness of the cured film can be adjusted by adding these ingredients.

The alkoxysilane is not particularly limited, provided that it has one or more hydrolyzable group. However, to increase the degree of polymerization and form a film having a higher hardness, a silane compound having two or more hydrolyzable groups is more preferred.

Specific examples of alkoxysilanes include dimethyldimethoxysilane, dimethyldiethoxysilane, dimethyldiisopropoxysilane, dimethyldibutoxysilane, dimethyldiisopropenoxysilane, propylmethyldimethoxysilane, hexylmethyldimethoxysilane, phenylmethyldimethoxysilane, diphenyldimethoxysilane, methyltrimethoxysilane, methyltriethoxysilane, methyltriisopropoxysilane, methyltributoxysilane, methyltriisopropenoxysilane, ethyltrimethoxysilane, ethyltriethoxysilane, butyltrimethoxysilane, hexyltrimethoxysilane, decyltrimethoxysilane, phenyltrimethoxysilane, cyclohexyltrimethoxysilane, tetramethoxysilane, tetraethoxysilane and partial hydrolyzates of these. These may be used singly or two or more may be used in combination.

Of these, from the standpoint of by-product volatilization, methoxysilanes and ethoxysilanes are preferred. From the standpoint of high reactivity, methoxysilanes are more preferred, and methyltrimethoxysilane, dimethyldimethoxysilane and their hydrolytic condensation products are even more preferred.

Use can also be made of one or more reactive functional group-bearing alkoxysilane compound such as vinylmethyldimethoxysilane, vinylmethyldiethoxysilane, 3-glycidoxypropylmethyldimethoxysilane, 3-glycidoxypropylmethyldiethoxysilane, 3-(meth)acryloxypropylmethyldimethoxysilane, 3-(meth)acryloxypropylmethyldiethoxysilane, 3-aminopropylmethyldimethoxysilane, 3-aminopropylmethyldiethoxysilane, 3-mercaptopropylmethyldimethoxysilane, 3-mercaptopropylmethyldiethoxysilane, vinyltrimethoxysilane, vinyltriethoxysilane, 5-hexenyltrimethoxysilane, 3-glycidoxypropyltrimethoxysilane, 3-glycidoxypropyltriethoxysilane, 3-(meth)acryloxypropyltrimethoxysilane, 3-(meth)acryloxypropyltriethoxysilane, 4-vinylphenyltrimethoxysilane, 3-(4-vinylphenyl)propyltrimethoxysilane, 4-vinylphenylmethyltrimethoxysilane, 3-aminopropyltrimethoxysilane, 3-aminopropyltriethoxysilane, 3-(2-aminoethyl)aminopropyltrimethoxysilane, 3-mercaptopropyltrimethoxysilane, 3-mercaptopropyltriethoxysilane and partial hydrolyzates of these.

In cases where alkoxysilanes and alkoxysilane hydrolytic condensation products are used, the amount of use thereof per 100 parts by weight of the alkoxysilyl group-containing perfluoropolyether compound is preferably 5,000 parts by weight or less, more preferably 3,000 parts by weight or less, and even more preferably 1,000 parts by weight or less. Although there is no particular lower limit, to suitably adjust the viscosity and curing time of the composition and the hardness of the cured film, at least 10 parts by weight is preferred, at least 50 parts by weight is more preferred, and at least 100 parts by weight is even more preferred.

Optional additives may be suitably added to the inventive composition within ranges that do not detract from the advantageous effects of the invention.

Examples of such additives include non-reactive silicone oils, reactive silicone oils, tackifiers such as silane coupling agents, antidegradants, rust inhibitors, colorants, surfactants, rheology modifiers, ultraviolet absorbers, infrared absorbers, fluorescent agents, abrasives, scents, fillers, dyes and pigments, leveling agents, reactive diluents, non-reactive polymeric resins, antioxidants, ultraviolet absorbers, light stabilizers, foam inhibitors, dispersants, antistatic agents and thixotropic agents.

The inventive composition which includes an alkoxysilyl group-containing perfluoropolyether compound may be employed as a coating for various metal, glass, ceramic, resin and other substrates.

There are no particular limitations on the coating technique. Use may be made of any technique, such as application using a cloth impregnated with the composition, brush coating, or mechanical application using automated equipment.

**In** the inventive composition, the method of impregnating a suitable amount of the inventive composition into a sponge or a rag or other cloth that is dry or has been wetted with water, lightly spreading this by hand over the surface of the substrate, subsequently wiping off excess composition with a dry cloth such as a rag, and air drying or forced drying using a dryer or the like is preferred.

At this time, in the presence of the catalyst included in the composition and under the action of moisture in the air, moisture on the substrate and water included in the sponge used for application, the alkoxy groups included in the composition incur hydrolysis at aluminum, titanium, zirconium and other Lewis acid sites incorporated into the silicone resin and crosslink on the substrate, forming a cured film.

The coating layer due to the inventive composition is preferably a thin film, the thickness of which is preferably from 0.01 to 100 µm, and more preferably from 0.1 to 50 µm. When the coating layer is in this range, good water and oil repellency, ease of application, durability and an aesthetic appearance can all be achieved.

The mechanism by which a film having excellent properties is formed by the alkoxysilyl group-containing perfluoropolyether compound of the invention is thought to be as follows.

First, upon applying the alkoxysilyl group-containing perfluoropolyether compound of the invention to the surface of a substrate, the hydrolyzable groups are decomposed by moisture in the air, becoming hydroxyl groups; the hydroxyl groups dehydratively condense with one another, as a result of which siloxane bonds form and curing takes place.

By also adding an alkoxysilane or an alkoxysilane oligomer, the alkoxysilyl groups thereon take part in crosslinking via condensation reactions and are incorporated into the coating film, forming a coating film of excellent film strength. By increasing the proportion of trifunctional and tetrafunctional siloxane bonds in particular, the hardness of the cured film becomes higher.

At this time, because the perfluoropolyether chains are miscible with the saturated hydrocarbon solvent and the alkoxysilane or hydrolytic condensation product of alkoxysilane and are also present near the substrate surface, even if the composition is wiped up in an uncured state, the perfluoropolyether chains remain in the film, giving a film having water and oil repellency.

The inventive composition, because it exhibits water and oil repellency even after being coated onto a substrate surface and wiped up prior to curing, is well-suited for use on steel sheets and precoated steel sheets or on glass surfaces, and is especially well-suited for use on precoated steel sheets that are used in automotive exteriors.

The surface of the cured product obtained by applying the alkoxysilyl group-containing perfluoropolyether compound of the invention to a substrate and curing the compound, or when the compound is cured by itself without being applied to a substrate, also exhibits properties such as soil resistance, water repellency, oil repellency and fingerprint resistance. These properties give a cured product surface which is resistant to soiling by human oils such as fingerprints, sebum and sweat, cosmetics and the like and which, even in cases where soiling has taken place, can easily be wiped clean.

Therefore, the alkoxysilyl group-containing perfluoropolyether compounds of the invention and compositions containing the same are useful also as hardcoat compositions that are used to form a coat or protective film on the surface of objects with which the human body comes into contact and which may be soiled by human oils, cosmetics and the like.

Examples of objects that may be hardcoated in this way include optical recording media such as magneto-optical disks, optical disks such as CDs, LDs, DVDs and Blu-ray disks, and hologram records; optical components and optical devices, such as eyeglass lenses, prisms, lens sheets, pellicle membranes, polarizing plates, optical filters, lenticular lenses, Fresnel lenses, antireflective films, optical fibers and optical couplers; various types of screens and display units such as CRTs, liquid-crystal displays, plasma displays, electroluminescence displays, rear-projection displays, fluorescent display tubes (VFDs), field emission projection displays and toner displays, especially screens and display devices for PCs, mobile phones, portable information terminals, game consoles, electronic book readers, digital cameras, digital video cameras, ATMs, cash dispensing machines, vending machines, automotive and other navigation systems and security system terminals, as well as touch panel (touch sensor, touch screen)-type image display and input devices for carrying out also their operation; input devices such as mobile phones, portable information terminals, electronic book readers, portable music players, handheld game consoles, remote controllers, controllers, keyboards, and panel switches for on-board units; the housing surfaces of mobile phones, portable information terminals, cameras, portable music players and handheld game consoles; automobile exterior, piano, high-end furniture, marble and other surfaces; transparent glass or transparent plastic (acrylic, polycarbonate, etc.) members such as protective glass for displaying art objects, show windows, showcases, covers for advertising, photo frame covers, watches, automotive windshields, window glass for railcars and airplanes, and automotive headlights and tail lights; and various types of mirror members.

In these applications, the inventive composition can be employed not only by coating onto the surface of the target object, but also in methods involving transfer that are widely used in, for example, in-mold decoration.

### EXAMPLES

Synthesis Examples, Examples and Comparative Examples are given below to more fully illustrate the invention, although the invention is not limited by these Examples. In the Examples below, "Me" stands for a methyl group.

### [1] Synthesis of Starting Compounds

### [Synthesis Example 1]

A glass flask equipped with a stirrer, a thermometer, a condenser and a dropping apparatus was charged with 1,024 g of the compound of formula (9) below (product name, Fomblin D2, from Solvay Specialty Polymer; Mn, 1,500), 258 g of 3-isocyanatopropyltrimethoxysilane and 1.28 g of tin octanoate as a urethane formation catalyst, following which stirring was initiated under a stream of nitrogen and reaction was carried out for 1 hour at 60°C. After confirming the disappearance of the isocyanate groups by infrared spectroscopy, the reaction was stopped, giving the compound of formula (10) below.

Next, in a dry nitrogen atmosphere, a 5,000 mL three-neck flask equipped with a reflux apparatus and a stirrer was charged with 1,255 g of the compound of formula (10) below, 665 g of tetramethyldisiloxane, 1,255 g of methyl ethyl ketone and 20 g of methanesulfonic acid, and the system was cooled to 5°C under stirring. To this was added 71 g of deionized water in a dropwise manner and stirring was continued for 3 hours while maintaining the internal temperature at 0 to 10°C. Next, 100 g of hydrotalcite (Kyowaad 500SH, from Kyowa Chemical Industry Co., Ltd.) was added and two hours of stirring was carried out while maintaining the internal temperature at 0 to 10°C. The solvent and excess tetramethyldisiloxane were driven off in vacuo, following which the hydrotalcite was filtered off, yielding 1,130 g of a clear, colorless liquid of formula (11) below. 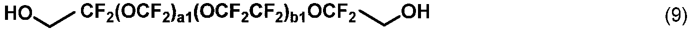 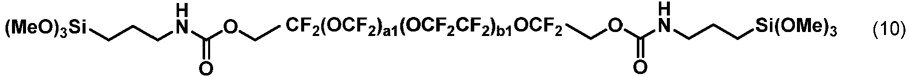 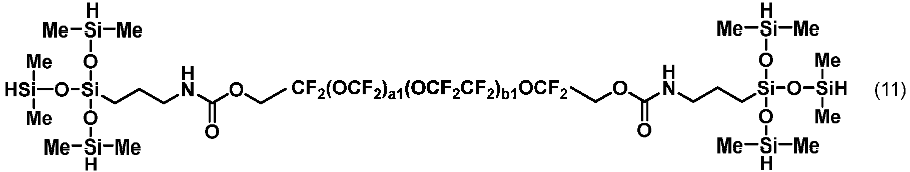 (In the formulae, a1 ≥ 1, b1 ≥ 1, a1/b1 = 0.76, the arrangement of the recurring units in parentheses to which a1 and b1 are attached is indefinite, and the number-average molecular weight of the perfluoropolyether chain is 1,500.)

### [Synthesis Example 2]

A glass flask equipped with a stirrer, a thermometer, a condenser and a dropping apparatus was charged with 1,024 g of the compound of formula (9) below (product name, Fomblin D2, from Solvay Specialty Polymer; Mn, 1,500), 237 g of 3-isocyanatopropyldimethoxysilane and 1.28 g of tin octanoate as a urethane formation catalyst, following which stirring was initiated under a stream of nitrogen and reaction was carried out for 1 hour at 60°C. After confirming the disappearance of the isocyanate groups by infrared spectroscopy, the reaction was stopped, giving the compound of formula (12) below.

Next, in a dry nitrogen atmosphere, a 5,000 mL three-neck flask equipped with a reflux apparatus and a stirrer was charged with 1,237 g of the compound of formula (12) below, 443 g of tetramethyldisiloxane, 1,237 g of methyl ethyl ketone and 18 g of methanesulfonic acid, and the system was cooled to 5°C under stirring. To this was added 48 g of deionized water in a dropwise manner and stirring was continued for 3 hours while maintaining the internal temperature at 0 to 10°C. Next, 88 g of hydrotalcite (Kyowaad 500SH, from Kyowa Chemical Industry Co., Ltd.) was added and two hours of stirring was carried out while maintaining the internal temperature at 0 to 10°C. The solvent and excess tetramethyldisiloxane were driven off in vacuo, following which the hydrotalcite was filtered off, yielding 1,256 g of a clear, colorless liquid of formula (13) below. 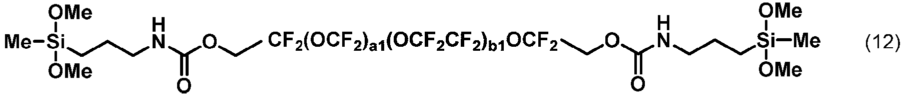 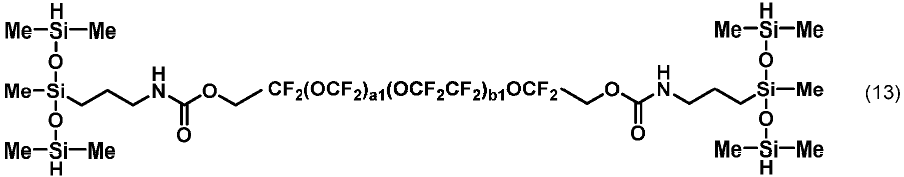 (In the formulae, a1 ≥ 1, b1 ≥ 1, a2/b2 = 0.76, the arrangement of the recurring units in parentheses to which a2 and b2 are attached is indefinite, and the number-average molecular weight of the perfluoropolyether chain is 1,500.)

### [Comparative Synthesis Example 1]

After mixing together 53.2 g of the compound of formula (10) and 136.2 g of methyl trimethoxysilane in a glass flask equipped with a stirrer, a thermometer, a condenser and a dropping apparatus, 1.5 g of methanesulfonic acid was added under stirring, following 17 g of deionized water was added dropwise over a period of 1 hour. Following the end of addition, the system was heated for 2 hours at 67°C and 61 g of methanol that formed was removed using a Dean-Stark trap. Next, 4.5 g of Kyowaad 500SH (Kyowa Chemical Industry Co., Ltd.) was added and neutralization was carried out by two hours of stirring at 25°C. The remaining methanol and low-molecular-weight ingredients were then driven off in vacuo, giving silicone oligomers connected by a perfluoropolyether chain (A-4).

### [2] Production of Alkoxysilyl Group-Containing Perfluoropolyether Compound

### [Example 1-1]

In a dry nitrogen atmosphere, 80 g of vinyltrimethoxysilane, 114 g of toluene and 0.66 g of a toluene solution of a chloroplatinic acid/vinylsiloxane complex (containing 1.7×10⁻⁵ mole of platinum) were mixed with 114 g of Compound (11) obtained in Synthesis Example 1 and stirred for 2 hours at 80°C. After confirming the disappearance of signals from Si-H groups in ¹H-NMR and FT-IR measurements, the solvent and excess allyloxytrimethylsilane were driven off in vacuo and treatment with activated carbon was carried out, followed by filtration, yielding 138 g of Compound (A-1) of formula (14) below as a clear, light-yellow liquid. 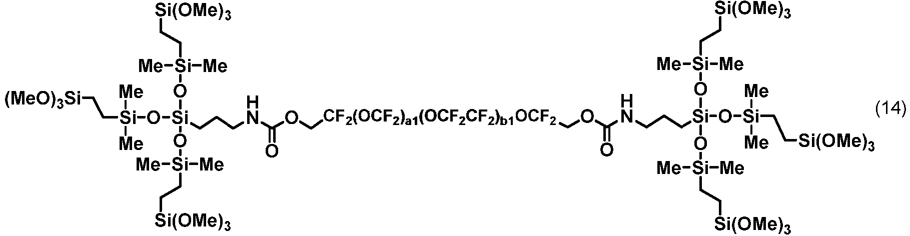 (In the formula, a1 ≥ 1, b1 ≥ 1, a1/b1 = 0.76, the arrangement of the recurring units in parentheses to which a1 and b1 are attached is indefinite, and the number-average molecular weight of the perfluoropolyether chain is 1,500.)

### [Example 1-2]

In a dry nitrogen atmosphere, 126 g of 7-octenyltrimethoxysilane, 92 g of toluene and 0.66 g of a toluene solution of a chloroplatinic acid/vinylsiloxane complex (containing 1.7×10⁻⁵ mole of platinum) were mixed with 114 g of Compound (11) obtained in Synthesis Example 1 and stirred for 2 hours at 80°C. After confirming the disappearance of signals from Si-H groups in ¹H-NMR and FT-IR measurements, the solvent and excess allyloxytrimethylsilane were driven off in vacuo and treatment with activated carbon was carried out, followed by filtration, yielding 162 g of Compound (A-2) of formula (15) below as a clear, light-yellow liquid. 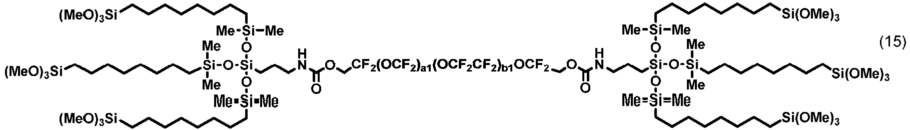 (In the formula, a1 ≥ 1, b1 ≥ 1, a1/b1 = 0.76, the arrangement of the recurring units in parentheses to which a1 and b1 are attached is indefinite, and the number-average molecular weight of the perfluoropolyether chain is 1,500.)

### [Example 1-3]

In a dry nitrogen atmosphere, 84 g of 7-octenyltrimethoxysilane, 42 g of toluene and 0.44 g of a toluene solution of a chloroplatinic acid/vinylsiloxane complex (containing 1.2×10⁻⁵ mole of platinum) were mixed with 95 g of Compound (13) obtained in Synthesis Example 2 and stirred for 2 hours at 80°C. After confirming the disappearance of signals from Si-H groups in ¹H-NMR and FT-IR measurements, the solvent and excess allyloxytrimethylsilane were driven off in vacuo and treatment with activated carbon was carried out, followed by filtration, yielding 102 g of Compound (A-3) of formula (16) below as a clear, light-yellow liquid. 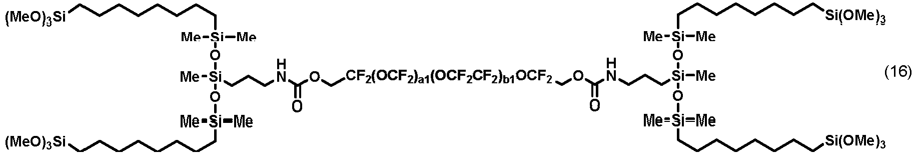 (In the formula, a1 ≥ 1, b1 ≥ 1, a1/b1 = 0.76, the arrangement of the recurring units in parentheses to which a1 and b1 are attached is indefinite, and the number-average molecular weight of the perfluoropolyether chain is 1,500.)

### [3] Preparation of Compositions

### [Examples 2-1 to 2-8, Comparative Examples 2-1 and 2-2]

The respective compositions were prepared by mixing Compounds (A-1) to (A-4) obtained in above Examples 1-1 to 1-3 and Comparative Synthesis Example 1 with the following ingredients at 25°C in the proportions shown in Table 1.
(B): A 1:1 (weight ratio) mixture of the siloxane compound
(CH₃)(CH₃O)₂SiOSi(CH₃)(OCH₃)₂ and the silane compound (CH₃)₂Si(OCH₃)₂
(C): An isoparaffinic solvent (ISOPAR G, from ExxonMobil; initial boiling point, 166°C; dry point, 176°C)
(D): The hydrolytic condensation catalyst (C₄H₉O)Al(-OC(CH₃)=CHCOOC₂H₅)₂

**[Table 1]**

| Formulation (pbw) | Example | | | | | | | | Comparative Example | |
|---|---|---|---|---|---|---|---|---|---|---|
| | 2-1 | 2-2 | 2-3 | 2-4 | 2-5 | 2-6 | 2-7 | 2-8 | 2-1 | 2-2 |
| (A-1) | 100 | 50 | - | - | - | - | - | - | - | - |
| (A-2) | - | - | 100 | 100 | 100 | 5 | 100 | - | - | - |
| (A-3) | - | - | - | - | - | - | - | 100 | - | - |
| (A-4) | - | - | - | - | - | - | - | - | 100 | 50 |
| (B) | - | 50 | - | - | - | 95 | - | - | - | 50 |
| (C) | 100 | 100 | 100 | 1,000 | 3,000 | 100 | 10 | 100 | 100 | 100 |
| (D) | 5 | 5 | 5 | 5 | 5 | 5 | 5 | 5 | 5 | 5 |

The following evaluations were carried out on the compositions obtained in Examples 2-1 to 2-8 and Comparative Examples 2-1 and 2-2. The results are shown in Table 2.

### (1) Composition Appearance

The appearance of the composition was visually examined.

### (2) Film Appearance

Each of the compositions obtained was applied onto a soda lime glass plate with wire bars having 20 µm gaps and moisture-cured by being left at rest for 24 hours at 25°C and 65% RH, following which the appearance of the cured film surface was visually examined.

### (3) Contact Angle

Each of the compositions obtained was applied onto an electrodeposition-coated plate (automotive paint-coated black test plate, from Standard-testpiece K.K.) with wire bars having 20 µm gaps and moisture-cured by being left at rest for 24 hours at 25°C and 65% RH, following which the water contact angle and hexadecane contact angle (liquid drop volume, 2 µL) at the surface of the cured film were measured with a contact angle meter (Drop Master DM-701, from Kyowa Interface Science Co., Ltd.).

**[Table 2]**

| Composition | Example | | | | | | | | Comparative Example | |
|---|---|---|---|---|---|---|---|---|---|---|
| | 2-1 | 2-2 | 2-3 | 2-4 | 2-5 | 2-6 | 2-7 | 2-8 | 2-1 | 2-2 |
| Composition appearance | clear | clear | clear | clear | clear | clear | clear | clear | separated | separated |
| Film appearance | clear | clear | clear | clear | clear | clear | clear | clear | cloudy | cloudy |
| Water contact angle (°) | 110 | 109 | 109 | 108 | 109 | 108 | 107 | 108 | 109 | 109 |
| Hexadecane contact angle (°) | 64 | 63 | 64 | 63 | 64 | 63 | 61 | 62 | 63 | 63 |

As shown in Table 2, in Examples 2-1 to 2-8, the perfluoropolyether ingredient and the saturated hydrocarbon solvent were miscible, resulting in a clear composition and a clear film. Moreover, the film obtained was found to have the same degree of water repellency and oil repellency as in the Comparative Examples.

On the other hand, in the Comparative Examples, the compatibility was poor, leading to separation of the composition. As a result, the film was found to be cloudy.

## Claims

1. An alkoxysilyl group-containing perfluoropolyether compound of formula (1) below
X-Z-PFPE-Z-X (1)
wherein
PFPE is a divalent perfluoropolyether chain having a number-average molecular weight of from 500 to 5,000 which are standard polystyrene-equivalent values obtained by gel permeation chromatography,
each X is independently a group of formula (2) below 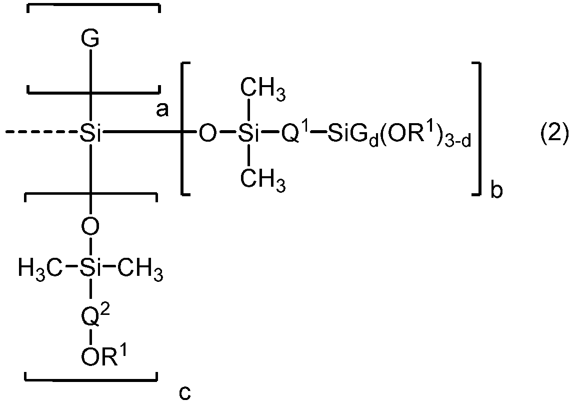 wherein each Q¹ is independently a divalent organic group of 2 to 12 carbon atoms which may have a cyclic structure or a branched structure, each Q² is independently a divalent organic group of 2 to 12 carbon atoms which may include an ether bond and may have a cyclic structure or a branched structure, each R¹ is independently an alkyl group of 1 to 12 carbon atoms, each G is independently an alkyl group of 1 to 12 carbon atoms, 'a' is 0 or 1, 'b' is 2 or 3 and 'c' is 0 such that a+b+c = 3, and 'd' is an integer from 0 to 2, and
each Z is independently a divalent organic group of any one of the following formulae 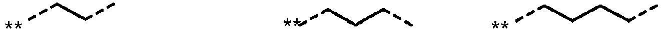 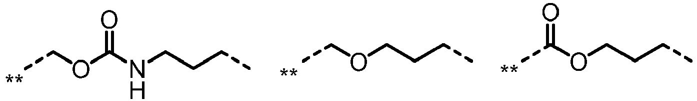 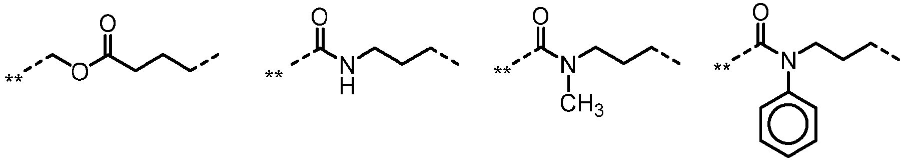 wherein a dashed line denotes a bond and ** denotes a bonding site to the PFPE.

2. The alkoxysilyl group-containing perfluoropolyether compound of claim 1, wherein PFPE is a perfluoropolyether chain of formula (3) below which has a number-average molecular weight of from 1,000 to 3,000
---CF₂(OCF₂)ₐ₁(OCF₂CF₂)_{b1}OCF₂--- (3)
wherein a1 and b1 are numbers that satisfy the conditions a1 ≥ 1, b1 ≥ 1 and a1/b1 is from 1/10 to 10/1, the dashed lines denote bonds, and the recurring units within parentheses to which a1 and b1 are attached are arranged in any order.

3. The alkoxysilyl group-containing perfluoropolyether compound of claim 1 or 2, wherein each Z is independently a divalent organic group of any of the following formulae 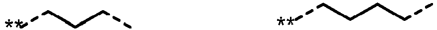 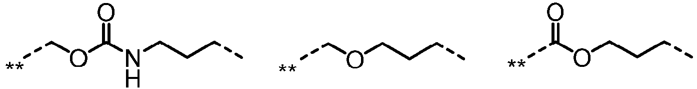 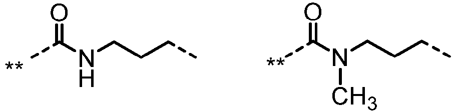 wherein a dashed line and ** are as defined above.

4. The alkoxysilyl group-containing perfluoropolyether compound of any one of claims 1 to 3, wherein each Q¹ is independently a divalent organic group of any of the following formulae
* --CH₂CH₂-- * ---CH(CH₃)--- *--CH₂CH₂CH₂-- *--CH(CH₃)CH₂--
* --CH₂CH₂CH₂CH₂-- * --CH₂CH(CH₃)CH₂-- * --CH₂CH₂CH₂CH₂CH₂-- * ---CH₂CH₂CH(CH₃)CH₂--
* --CH₂CH₂CH₂CH₂CH₂CH₂-- * --CH₂CH₂CH₂CH(CH₃)CH₂-- *--CH₂CH₂CH₂CH₂CH₂CH₂CH₂--
* --CH₂CH₂CH₂CH₂CH(CH₃)CH₂--- * --CH₂CH₂CH₂CH₂CH₂CH₂CH₂CH₂-- *--CH₂CH₂CH₂CH₂CH₂CH(CH₃)CH₂--
wherein a dashed line denotes a bond and * denotes a bonding site to a silicon atom.

5. The alkoxysilyl group-containing perfluoropolyether compound of any one of claims 1 to 4, wherein each G is independently an alkyl group of 1 to 6 carbon atoms.

6. A composition comprising 100 parts by weight of the alkoxysilyl group-containing perfluoropolyether compound of any one of claims 1 to 5 and from 0.01 to 100 parts by weight of a hydrolytic condensation catalyst.

7. The composition of claim 6, further comprising a saturated hydrocarbon solvent.

8. The composition of claim 7, wherein the saturated hydrocarbon solvent is one or more selected from isoparaffinic solvents and naphthene solvents.

9. The composition of any one of claims 6 to 8, further comprising at least one compound selected from the group consisting of alkoxysilanes and hydrolytic condensation products of alkoxysilanes.

10. A cured product obtained by curing the composition of any one of claims 6 to 9.

11. An article comprising a film made of the cured product of claim 10.

12. A hydrolytic condensation product of the alkoxysilyl group-containing perfluoropolyether compound of any one of claims 1 to 5.

## Patentansprüche

1. Alkoxysilylgruppen enthaltende Perfluorpolyether-Verbindung der nachstehenden Formel (1):
X-Z-PFPE-Z-X (1)
worin
PFPE eine zweiwertige Perfluorpolyether-Kette ist, die ein zahlenmittleres Molekulargewicht von 500 bis 5.000 aufweist, die Polystyrol-Äquivalent-Standardwerte sind, die durch Gelpermeationschromatographie erhalten werden,
die X jeweils unabhängig eine Gruppe der nachstehenden Formel (2) sind: 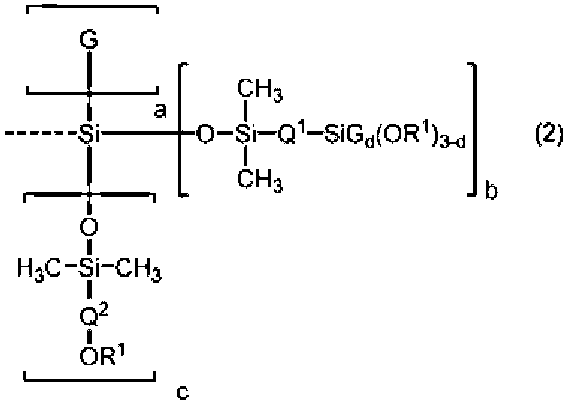 worin Q¹ jeweils unabhängig eine zweiwertige organische Gruppe mit 2 bis 12 Kohlenstoffatomen ist, die eine zyklische Struktur oder eine verzweigte Struktur aufweisen kann, Q² jeweils unabhängig eine zweiwertige organische Gruppe mit 2 bis 12 Kohlenstoffatomen ist, die eine Etherbindung umfassen kann und eine zyklische Struktur oder eine verzweigte Struktur aufweisen kann, die R¹ jeweils unabhängig eine Alkylgruppe mit 1 bis 12 Kohlenstoffatomen sind, G jeweils unabhängig eine Alkylgruppe mit 1 bis 12 Kohlenstoffatomen ist, "a" = 0 oder 1 ist, "b" = 2 oder 3 ist und "c" = 0 ist, so dass gilt: a + b + c = 3, und "d" eine ganze Zahl von 0 bis 2 ist, und
die Z jeweils unabhängig eine zweiwertige organische Gruppe gemäß einer der folgenden Formeln sind: 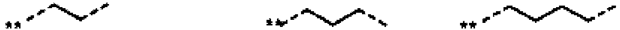 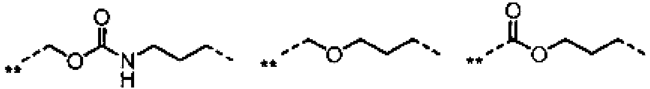 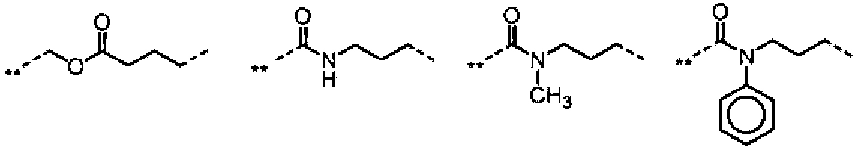 worin eine gestrichelte Linie eine Bindung anzeigt und ** die Anbindungsstelle an PFPE anzeigt.

2. Alkoxysilylgruppen enthaltende Perfluorpolyether-Verbindung nach Anspruch 1, worin PFPE eine Perfluorpolyether-Kette der nachstehende Formel (3) ist, die ein zahlenmittleres Molekulargewicht von 1.000 bis 3.000 aufweist,
---CF₂(OCF₂)ₐ₁(OCF₂CF₂)_{b1}OCF₂--- (3)
worin a1 und b1 Zahlen sind, welche die Bedingungen erfüllen, dass a1 ≥ 1 ist, b1 ≥ 1 ist und a1/b1 = 1/10 bis 10/1 beträgt, die gestrichelten Linien Bindungen einzeigen und die Wiederholeinheiten in Klammern, an die a1 und b1 gebunden sind, in einer beliebigen Reihenfolge angeordnet sind.

3. Alkoxysilylgruppen enthaltende Perfluorpolyether-Verbindung nach Anspruch 1 oder 2, worin die Z jeweils unabhängig eine zweiwertige organische Gruppe gemäß einer beliebigen der folgenden Formeln sind: 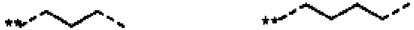 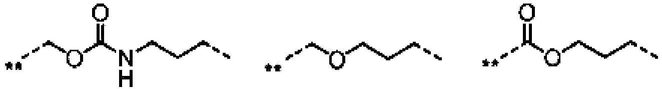 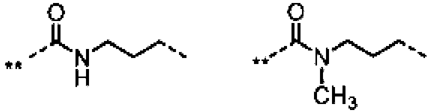 worin eine gestrichelte Linie und ** wie oben definiert sind.

4. Alkoxysilylgruppen enthaltende Perfluorpolyether-Verbindung nach einem der Ansprüche 1 bis 3, worin Q¹ jeweils unabhängig eine zweiwertige organische Gruppe gemäß einer der folgenden Formeln ist:
▪ --CH₂CH₂-- ▪---CH(CH₃)--- ▪ --CH₂CH₂CH₂-- ▪ --CH(CH₃)CH₂--
▪ --CH₂CH₂CH₂CH₂-- ▪ --CH₂CH(CH₃)CH₂-- ▪ --CH₂CH₂CH₂CH₂CH₂-- ▪ ---CH₂CH₂(CH₃)CH₂--
▪ --CH₂CH₂CH₂CH₂CH₂CH₂-- ▪ --CH₂CH₂CH₂CH(CH₃)CH₂-- ▪ --CH₂CH₂CH₂CH₂CH₂CH₂CH₂--
▪ --CM₂CH₂CH₂CH₂CH(CH₃)CH₂--- ▪ --CH₂CH₂CH₂CH₂CH₂CH₂CH₂CH₂-- ▪ --CH₂CH₂CH₂CH₂CH₂CH(CH₃)CH₂--
worin eine gestrichelte Linie eine Bindung anzeigt und * die Anbindungsstelle an ein Siliciumatom anzeigt.

5. Alkoxysilylgruppen enthaltende Perfluorpolyether-Verbindung nach einem der Ansprüche 1 bis 4, worin G jeweils unabhängig eine Alkylgruppe mit 1 bis 6 Kohlenstoffatomen ist.

6. Zusammensetzung, die 100 Gewichtsteile einer Alkoxysilylgruppen enthaltenden Perfluorpolyether-Verbindung nach einem der Ansprüche 1 bis 5 und 0,01 bis 100 Gewichtsteile eines hydrolytischen Kondensations-Katalysators umfasst.

7. Zusammensetzung nach Anspruch 6, die weiters ein gesättigtes KohlenwasserstoffLösungsmittel umfasst.

8. Zusammensetzung nach Anspruch 7, wobei das gesättigte KohlenwasserstoffLösungsmittel eines oder mehrere, ausgewählt aus Isoparaffin-Lösungsmitteln und Naphthen-Lösungsmitteln ist/sind.

9. Zusammensetzung nach einem der Ansprüche 6 bis 8, die weiters zumindest eine Verbindung umfasst, die aus der aus Alkoxysilanen und hydrolytischen Kondensationsprodukten von Alkoxysilanen bestehenden Gruppe ausgewählt ist.

10. Gehärtetes Produkt, das durch Härten einer Zusammensetzung nach einem der Ansprüche 6 bis 9 erhältlich ist.

11. Gegenstand, der eine Folie umfasst, die aus einem gehärteten Produkt nach Anspruch 10 besteht.

12. Hydrolytisches Kondensationsprodukt einer Alkoxysilylgruppen enthaltenden Perfluorpolyether-Verbindung nach einem der Ansprüche 1 bis 5.

## Revendications

1. Composé perfluoropolyéther contenant un groupe alcoxysilyle de formule (1) ci-dessous
X-Z-PFPE-Z-X **(1)**
dans lequel
le PFPE est une chaîne de perfluoropolyéther divalente présentant un poids moléculaire moyen en nombre de 500 à 5 000 qui sont des valeurs équivalentes au polystyrène standard obtenues par chromatographie par perméation de gel,
chaque X est indépendamment un groupe de formule (2) ci-dessous 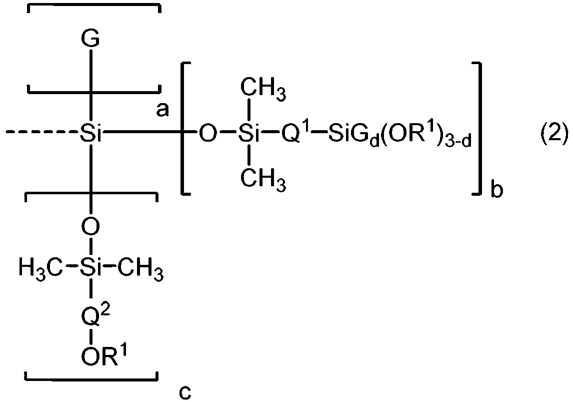
dans lequel chaque Q¹ est indépendamment un groupe organique divalent de 2 à 12 atomes de carbone qui peut présenter une structure cyclique ou une structure ramifiée, chaque Q² est indépendamment un groupe organique divalent de 2 à 12 atomes de carbone qui peut comprendre une liaison éther et peut présenter une structure cyclique ou une structure ramifiée, chaque R¹ est indépendamment un groupe alkyle de 1 à 12 atomes de carbone, chaque G est indépendamment un groupe alkyle de 1 à 12 atomes de carbone, « a » est 0 ou 1, « b » est 2 ou 3 et « c » est 0 de telle sorte que a + b + c = 3, et « d » est un nombre entier de 0 à 2, et
chaque Z est indépendamment un groupe organique divalent selon l'une quelconque des formules suivantes 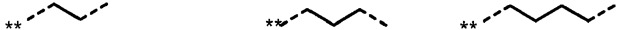 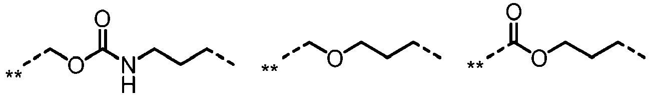 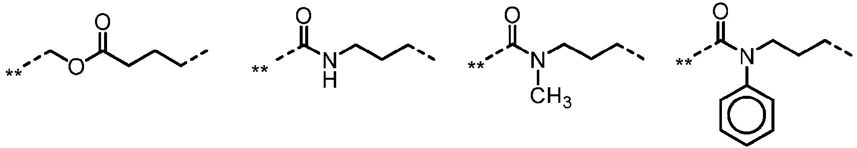
dans lequel une ligne pointillée désigne une liaison et ** désigne un site de liaison au PFPE.

2. Composé perfluoropolyéther contenant un groupe alcoxysilyle selon la revendication 1, dans lequel le PFPE est une chaîne perfluoropolyéther de la formule (3) ci-dessous qui présente un poids moléculaire moyen en nombre de 1 000 à 3 000
**---CF₂(OCF₂)ₐ₁(OCF₂CF₂)_{b1}OCF₂---** (3)
dans lequel a1 et b1 sont des nombres qui satisfont les conditions a1 ≥ 1, b1 ≥ 1 et a1/b1 est compris entre 1/10 et 10/1, les lignes en pointillés désignent des liaisons, et les unités récurrentes entre parenthèses auxquelles a1 et b1 sont attachés sont agencées dans un ordre quelconque.

3. Composé perfluoropolyéther contenant un groupe alcoxysilyle selon la revendication 1 ou 2, dans lequel chaque Z est indépendamment un groupe organique divalent de l'une quelconque des formules suivantes 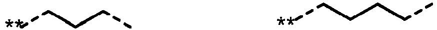 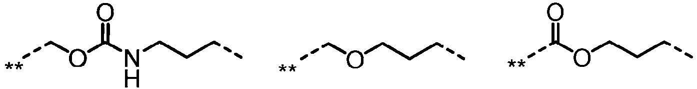 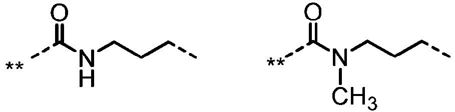 dans lequel une ligne pointillée et ** sont tels que définis ci-dessus.

4. Composé perfluoropolyéther contenant un groupe alcoxysilyle selon l'une quelconque des revendications 1 à 3, dans lequel chaque Q¹ est indépendamment un groupe organique divalent selon l'une quelconque des formules suivantes
* --CH₂CH₂-- * ---CH(CH₃)--- * --CH₂CH₂CH₂-- * --CH(CH₃)CH₂--
* --CH₂CH₂CH₂CH₂-- * --CH₂CH(CH₃)CH₂-- *--CH₂CH₂CH₂CH₂CH₂-- * ---CH₂CH₂CH(CH₃)CH₂--
* --CH₂CH₂CH₂CH₂CH₂CH₂-- * --CH₂CH₂CH₂CH(CH₃)CH₂-- * --CH₂CH₂CH₂CH₂CH₂CH₂CH₂--
*--CH₂CH₂CH₂CH₂CH(CH₃)CH₂--- *--CH₂CH₂CH₂CH₂CH₂CH₂CH₂CH₂-- *--CH₂CH₂CH₂CH₂CH₂CH(CH₃)CH₂--
dans lequel une ligne pointillée désigne une liaison et * désigne un site de liaison à un atome de silicium.

5. Composé perfluoropolyéther contenant un groupe alcoxysilyle selon l'une quelconque des revendications 1 à 4, dans lequel chaque G est indépendamment un groupe alkyle de 1 à 6 atomes de carbone.

6. Composition comprenant 100 parties en poids du composé perfluoropolyéther contenant un groupe alcoxysilyle selon l'une quelconque des revendications 1 à 5 et de 0,01 à 100 parties en poids d'un catalyseur de condensation hydrolytique.

7. Composition selon la revendication 6, comprenant en outre un solvant hydrocarboné saturé.

8. Composition selon la revendication 7, dans laquelle le solvant hydrocarboné saturé est un ou plusieurs choisis parmi des solvants isoparaffiniques et des solvants naphténiques.

9. Composition selon l'une quelconque des revendications 6 à 8, comprenant en outre au moins un composé choisi dans le groupe constitué d'alcoxysilanes et de produits de condensation hydrolytique d'alcoxysilanes.

10. Produit durci obtenu par durcissement de la composition selon l'une quelconque des revendications 6 à 9.

11. Article comprenant un film fait du produit durci de la revendication 10.

12. Produit de condensation hydrolytique du composé perfluoropolyéther contenant un groupe alcoxysilyle selon l'une quelconque des revendications 1 à 5.
